# EUROPÄISCHE PATENTSCHRIFT

(11) **EP 1 747 917 B1**
(45) Veröffentlichungstag und Bekanntmachung des Hinweises auf die Patenterteilung: **21.10.2009**
(21) Anmeldenummer: 06013774.2
(22) Anmeldetag: 04.07.2006
(51) Int. Cl.: B60H 1/00, B60H 1/22

(54) **Heizaggregat**
Heating device
Élément de chauffage

(30) Priorität: 28.07.2005 DE 202005012259 U
(43) Veröffentlichungstag der Anmeldung: 31.01.2007
(73) Patentinhaber: ebm-papst St. Georgen GmbH & Co. KG, 78112 St. Georgen (DE)
(72) Erfinder: Angelis, Walter, 78112 St. Georgen (DE); Winkler, Wolfgang A., 78112 St. Georgen (DE)
(74) Vertreter: Raible, Tobias

(56) Entgegenhaltungen:
- EP-A- 1 528 837
- WO-A-90/09524
- DE-A1- 2 823 637
- DE-U- 7 318 182
- JP-A- 59 199 315

## Beschreibung

Die Erfindung betrifft ein Heizaggregat, insbesondere für Fahrzeuge.

Fahrzeuge neuerer Bauart haben Antriebsaggregate mit Wirkungsgraden, die gegenüber früheren Motoren sehr stark verbessert sind. Dies bedeutet, dass für die Heizung solcher Fahrzeuge wenig Abwärme zur Verfügung steht, d.h. wenn nicht zusätzliche Maßnahmen getroffen werden, frieren deren Insassen, wenn das Wetter kalt ist. Dies gilt insbesondere für Dieselfahrzeuge, aber auch für Fahrzeuge mit Brennstoffzellenantrieben, und für Benzinfahrzeuge mit Hybridantrieb.

Aus diesem Grund verwendet man zusätzliche Heizaggregate, die teils mit Kraftstoff, teils mit Elektrizität betrieben werden. Beispielsweise kann mittels eines kleinen elektrischen Heizaggregats erwärmte Luft in den Fahrersitz eingeblasen werden, ebenso in den hinteren Fußraum, um dort eine Erwärmung zu bewirken. Am Dieselfilter kann mittels derartiger Heizaggregate warme Luft erzeugt werden, um dort durch eine Erwärmung ein Ausflocken von Paraffin zu vermeiden.

Um die Verkehrssicherheit und den Insassenkomfort zu erhöhen, sollten derartige Heizaggregate jedoch generell verfügbar sein, um nicht nur den Fahrersitz, den hinteren Fußraum und das Dieselfilter, sondern vielmehr den gesamten Fahrgastraum, das Lenkrad, die Frontscheibe, etc. zu erwärmen. Somit ergibt sich als eine wesentliche Anforderung an solche Heizaggregate, dass diese bereits in den ersten Minuten nach dem Start des Fahrzeugs effektiv arbeiten müssen, um eine schnelle Aufheizung zu bewirken.

Aus dem DE 7 318 182 U kennt man ein Radialgebläse für die elektrische Beheizung eines Wohnwagens. Dieses Gebläse hat auf der Auslassseite Heizdrähte. Es wird von einem Elektromotor angetrieben. Ein Thermostat auf der Abströmseite der Heizdrähte erfasst die Temperatur der abströmenden Luft, und wenn diese zu hoch ist, wird der Motor, und damit das Radialgebläse, auf eine höhere Drehzahl umgeschaltet.

Aus der DE 2 823 637 A1 kennt man ein Heissluftgebläse zum Abtauen von vereisten Fensterscheiben. Dieses hat eine Heizdüse, die von einem Radiallüfter mit Luft versorgt wird. In der Heizdüse befinden sich Glimmerplatten, auf denen elektrische Heizwendeln aufgespannt sind. Diese erwärmen die Luft, die aus der Heizdüse austritt. Bei dieser Luft wird eine ungleichmäßige Temperaturverteilung angestrebt.

Aus der EP 1 528 837 A1 kennt man eine elektrisch beheizbare Kunststoffmatrix. Diese verwendet einen elektrisch leitenden Kunststoff mit PTC-Eigenschaften und mit einer Wabenstruktur. Mittels einer solchen Kunststoffmatrix kann alternativ Luft oder Kühlerwasser beheizt werden.

Die WO 1990/009524 A1 betrifft einen Zentrifugallüfter, der für die Beschleunigung der Luft einen spiralförmigen Ausströmraum verwendet, der auch als "Volute" bezeichnet wird. An seinem Auslass hat dieser Lüfter ein Heizregister, und in der Zuleitung zu diesem Heizregister sind Luftleitbleche vorgesehen.

Aus der japanischen Patent-Offenlegungsschrift 59-199 315 vom 12.11.1984 kennt man eine Lüfteranordnung für die Klimaanlage eines Kraftfahrzeugs. Diese verwendet ein Radialgebläse, dessen Antriebsmotor unterhalb des Gebläserads angeordnet ist und mit der Kühlluft gekühlt wird, welche von diesem Gebläse erzeugt wird. Zu diesem Zweck geht vom Auslass des Gebläses ein Kühlluftrohr zu diesem Motor. Um zu verhindern, dass über dieses Rohr Kondenswasser in den Motor gelangt, ist es im Gebläseauslass nach oben verlängert und hat dort etwa die Querschnittsform eines hohlen Tragflügelprofils mit einer schrägen Einlassöffnung (für Kühlluft) im oberen Bereich.

Es ist deshalb eine Aufgabe der Erfindung, ein neues Heizaggregat bereit zu stellen.

Diese Aufgabe wird gelöst durch ein Heizaggregat gemäß Anspruch 1. Ein solches Heizaggregat lässt sich kompakt bauen, wobei durch den Einsatz eines Radiallüfters eine sehr flache Bauweise ermöglicht wird. Durch Verwendung eines Radiallüfters mit einer hohen Luftleistung kann eine schnelle Aufheizung erreicht werden, z.B. in einem Fahrgastraum. Hierbei wird der vom Radiallüfter erzeugte Luftstrom durch die säulenartigen Luftleitelemente derart beeinflusst, dass die am Auslass des Radiallüfters vorhandenen unterschiedlichen Strömungsgeschwindigkeiten im Wesentlichen vereinheitlicht werden.

Dabei wird gemäß Anspruch 4 das Heizaggregat mit Vorteil mit einem Klein- oder Kleinstlüfter ausgebildet. Derartige Kleinlüfter oder Minilüfter haben sehr kleine Abmessungen. Sie werden vor allem in der Elektronik zur aktiven Kühlung verwendet und verbinden eine sehr kompakte Bauweise mit Preiswürdigkeit, ausreichender Lebensdauer, und hohem Wirkungsgrad.

Eine bevorzugte Weiterbildung der Erfindung ist Gegenstand des Anspruchs 12. Hierdurch erhält man ein Heizaggregat, bei dem die Geschwindigkeit der Luft, welche durch den PTC-Widerstand strömt, an den verschiedenen Stellen dieses Widerstands nur wenig differiert. Dies ist bei der Verwendung von PTC-Heizelementen sehr vorteilhaft, denn wenn bei diesen an einer Stelle die Strömungsgeschwindigkeit besonders hoch ist, nimmt dort der elektrische Widerstand ab, und wenn die Strömungsgeschwindigkeit niedrig ist, kommt es zu einer lokalen Überhitzung und dadurch zu einer entsprechenden Zunahme des elektrischen Widerstands, so dass dort wenig Wärme erzeugt wird. So gelingt es, den Widerstand eines solchen PTC-Heizelements weitgehend in einem optimalen Arbeitsbereich zu halten und auf diese Weise auch mit einem kleinen Lüfter genügend Wärme zu erzeugen.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:
- Fig. 1: eine Schnittansicht eines nicht erfindungsgemäßen Heizaggregats;
- Fig. 2: eine Draufsicht auf eine Seite des Heizaggregats vom Fig. 1,
- Fig. 3: eine Schnittansicht eines nicht erfindungsgemäßen Heizaggregats.
- Fig. 4: eine Draufsicht auf eine Seite des Heizaggregats der Fig. 3,
- Fig. 5: eine Schnittansicht des Lüftergehäuses mit Druckraum und Radiallüfter zur Verdeutlichung des Entstehens unterschiedlicher Luftgeschwindigkeiten,
- Fig. 6: eine Schnittansicht eines erfindungsgemäßen Heizaggregats mit einer ersten Anordnung von Luftleitelementen nach der Erfindung,
- Fig. 7: eine Schnittansicht eines erfindungsgemäßen Heizaggregats mit einer zweiten Anordnung von Luftleitelementen nach der Erfindung,
- Fig. 8: eine Schnittansicht eines nicht erfindungsgemäßen Heizaggregats mit einer dritten Anordnung von Luftleitelementen nach der Erfindung,
- Fig. 9: eine Schnittansicht eines nicht erfindungsgemäßen Heizaggregats mit einer vierten Anordnung von Luftleitelementen nach der Erfindung,
- Fig. 10: eine perspektivische Ansicht von Luftleitelementen gemäß einer bevorzugten Ausführungsform der Erfindung, und
- Fig. 11: eine Schnittansicht der Luftleitelemente von Fig. 10.

In der nachfolgenden Beschreibung beziehen sich die Begriffe links, rechts, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

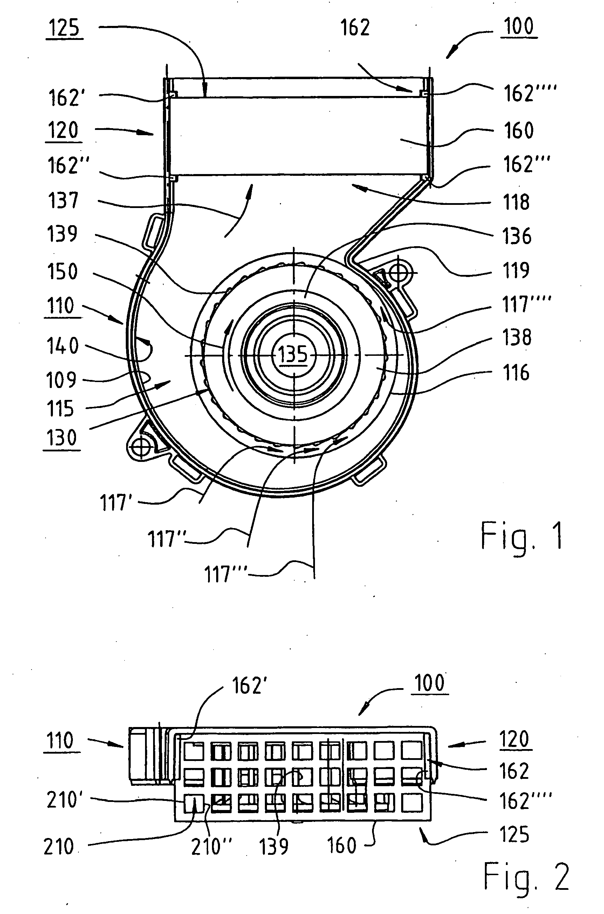

**Fig. 1** zeigt einen Längsschnitt durch ein von einer Vorderseite aus betrachtetes bekanntes Heizaggregat 100 (ohne obere Abdeckung). Das Heizaggregat 100 hat ein Lüftergehäuse 110 und ein Verbindungsteil 120. Im Inneren des Lüftergehäuses 110 ist ein Druckraum 115 ausgebildet, in welchem ein Radiallüfterrad 130 angeordnet ist. Das Lüftergehäuse 110 und das Verbindungsteil 120, welches ein elektrisches Heizelement 125 aufweist, sind miteinander verbunden. Das Gehäuse hat eine spiralförmige Außenwand 109 und wird deshalb als Spiralgehäuse 110 bezeichnet.

Wie Fig. 1 zeigt, ist das Verbindungsteil 120 vorzugsweise einstückig mit dem Lüftergehäuse 110 ausgebildet. Alternativ hierzu können das Lüftergehäuse 110 und das Verbindungsteil 120 jedoch als separate Bauteile ausgeführt werden, welche miteinander verbindbar sind, wodurch das Heizaggregat 100 einen modularen Aufbau erhält, so dass mit dem Lüftergehäuse 110 je nach den Erfordernissen Heizelemente unterschiedlicher Leistung gekoppelt werden können. Beispielsweise wird man für eine Verwendung in arktischen Gebieten Heizelemente mit höherer Leistung verwenden als für die Verwendung in einem tropischen Land. Auch erleichtert ein modularer Aufbau die Reinigung, und den Austausch defekter Teile.

Der Druckraum 115 des Lüftergehäuses 110 hat einen Lufteinlass 116, welcher eine Ansaugzone bildet, über die Umgebungsluft in den Druckraum 115 gesaugt wird, wie durch Pfeile 117', 117", 117''' und 117'''' angedeutet ist. Der Lufteinlass 116 wird durch eine Öffnung in der Vorderseite des Lüftergehäuses 110 gebildet. Im Druckraum 115 wird die angesaugte Luft durch den Radiallüfter 130 verdichtet und durch eine Luftaustrittsöffnung 118 wieder ausgestoßen, welche eine Ausblaszone bildet. Der Luftauslass 118 ist in Fig. 1 an der oberen Seite des Lüftergehäuses 110 dargestellt.

Wie Fig. 1 zeigt, ist der Druckraum 115 zur Verbesserung der spezifischen Luftleistung des Radiallüfters 130 spiralförmig ausgebildet und weist eine Luftleiteinrichtung 140 auf. Letztere dient zum Führen eines Luftstroms im Druckraum 115 hin zum Luftauslass 118 und verläuft im Inneren des Lüftergehäuses 110 von einem Verdichtungsanfangspunkt 119 im Uhrzeigersinn um den Radiallüfter 130 herum bis hin zum Luftauslass 118. Zur Geräuschminderung sowie zur Verbesserung der Luftleistung des Radiallüfters 130 kann die Luftleiteinrichtung 140 verschiedene (nicht dargestellte) Elemente enthalten, wie beispielsweise eine Zungenkante oder einen Ausleitwulst.

Der Radiallüfter 130 bildet vorzugsweise einen Kleinlüfter und dient zur Erzeugung eines Luftstroms vom Lufteinlass 116 über den Druckraum 115 zum Luftauslass 118. Beispielhafte Radiallüfter, welche im erfindungsgemäßen Heizaggregat 100 Anwendung finden können, sind die Lüfter der ebm-papst-Serien RV40, RL48 und RL65. Die Lüfter der Serie RV40 haben Abmessungen von 105 x 59 x 79 mm, die der Serie RL48 von 76 x 76 x 27 mm, und die Lüfter der Serie RL65 von 97 x 93,5 x 33 mm. Die Leistungsaufnahme solcher Lüfter liegt bei der Serie RV40 bei 2,3 ... 4,5 W, bei der Serie RL48 bei 2,9 ... 5 W und bei der Serie RL65 bei 15 W. Das Gewicht beträgt z.B. bei den Serien RV40 und RL48 75 g, und bei der Serie RL65 170 g.

Gemäß Fig. 1 hat der Radiallüfter 130 einen Motor 135 mit einem (nicht dargestellten) Innenstator, um den herum im Betrieb ein Außenrotor 136 rotiert, auf dessen Peripherie ein Lüfterrad 138 - mit angedeuteten Lüfterflügeln 139 - befestigt ist.

Im Betrieb rotiert das Lüfterrad 138 im Uhrzeigersinn, wie mit einem Pfeil 150 angedeutet ist, um einen Luftstrom in Richtung eines Pfeiles 137 vom Druckraum 115 hin zur Luftaustrittsöffnung 118 zu erzeugen. Dieser Luftstrom wird durch das elektrische Heizelement 125 geleitet und hierbei von diesem erwärmt.

Wie aus Fig. 1 ersichtlich ist, hat das elektrische Heizelement 125 einen Träger 162 für ein elektrisches Widerstands-Heizelement 160, beispielsweise PTC-Widerstände und/oder einen Heizdraht. Der Träger 162 hat vier zapfenförmige Trägerelemente 162', 162", 162''' und 162"", welche zur Befestigung des Heizelements 160 im Verbindungsteil 120 dienen.

Das in Fig. 1 dargestellte Heizelement 160 ist bevorzugt wabenförmig ausgebildet, beispielsweise als PTC-Wabenheizkeramik und wird nachfolgend unter Bezugnahme auf Fig. 2 beschrieben.

**Fig. 2** zeigt eine Draufsicht auf die in Fig. 1 oben dargestellte Seite des Heizaggregates 100 mit dem Lüftergehäuse 110 und dem im Verbindungsteil 120 angeordneten wabenförmigen Heizelement 160. Wie Fig. 2 zeigt, wird das Heizelement 160 im Verbindungsteil 120 vom Träger 162 gehalten, wobei in Fig. 2 jedoch nur die Trägerelemente 162' und 162'''' sichtbar sind.

Das Heizelement 160 hat eine Vielzahl von Luftkammern 210, durch die im Betrieb der vom Radiallüfter 130 erzeugte Luftstrom strömt. Hierbei wird die vom Heizelement 160 erzeugte Wärme an den Luftstrom abgegeben.

Die Luftkammern 210 haben linke innere Begrenzungsflächen 210' und rechte innere Begrenzungsflächen 210", welche jeweils für eine entsprechende Luftkammer eine Längsachse definieren. In dem in Fig. 2 dargestellten Ausführungsbeispiel sind die Längsachsen der Luftkammern 210 parallel zur Innenseite des Verbindungsteils 120 ausgerichtet. Dies wird dadurch verdeutlicht, dass die Lüfterflügel 139 durch die Luftkammern 210 sichtbar sind.

Vorzugsweise können die Längsachsen zumindest teilweise an die vektorielle Richtung des Luftstroms angepasst werden. Somit kann der Luftstrom im Wesentlichen ungehindert durch das wabenförmige Heizelement 160 durchströmen, wodurch ein Rückfluss des Luftstroms und insbesondere ein Rückstrom von bereits erwärmter Luft in den Druckraum 115 reduziert wird.

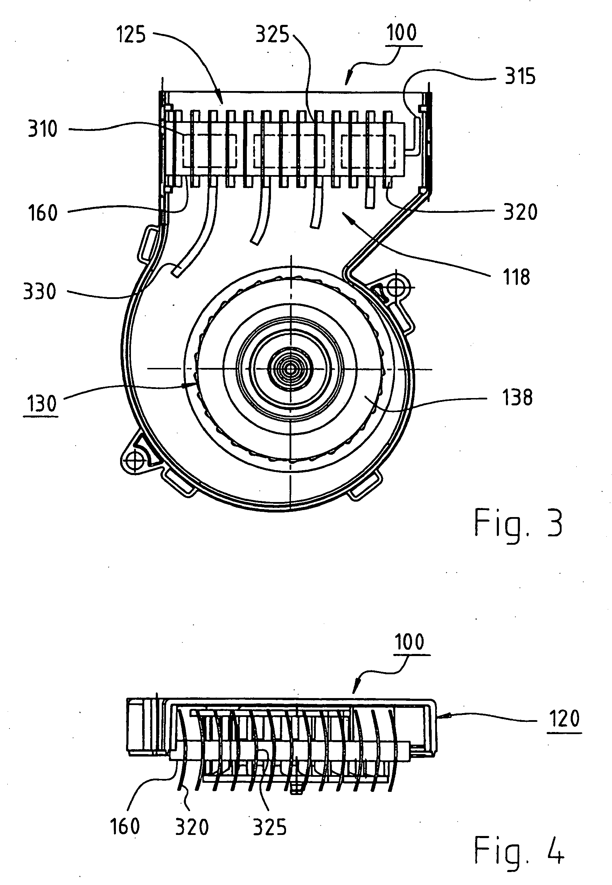

**Fig. 3** zeigt in einem weiteren Längsschnitt das Heizaggregat 100 von Fig. 1 mit einer alternativen Ausgestaltung des elektrischen Heizelements 125. Gemäß Fig. 3 weist das elektrische Widerstands-Heizelement 160 des Heizelements 125 von Fig. 3 pillenförmige PTC-Heizelemente 310 auf und kann über eine Leitung 315 mit einer (nicht dargestellten) Spannungsquelle verbunden werden. Die Anschlussleitung 315 kann mit einem Steckeranschluss versehen sein.

Das Heizelement 160 hat Luftdurchtrittsöffnungen 325, in die sich jeweils ein Wärmeableitelement 320 erstreckt, welches wärmeleitend mit dem Heizelement 160 verbunden ist.

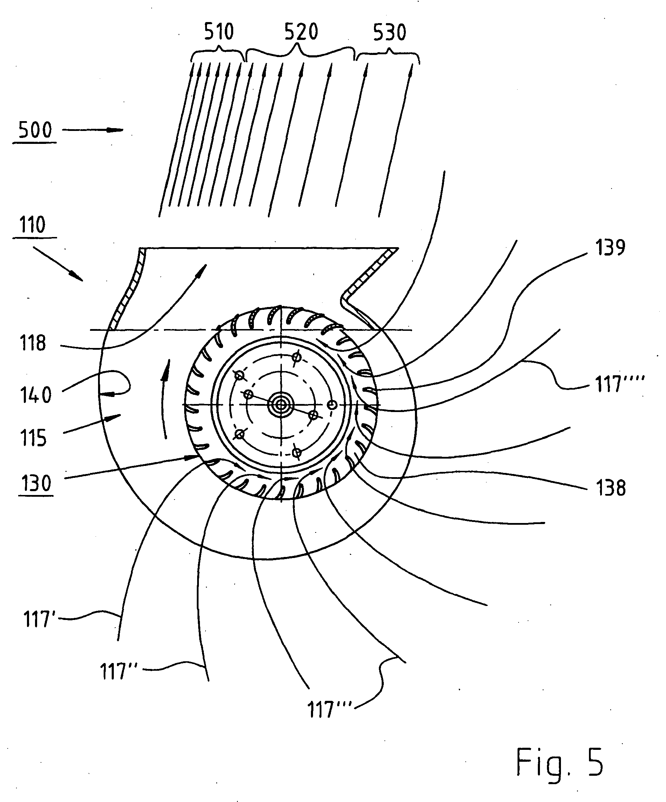

Im Betrieb rotiert das Lüfterrad 138 des Radiallüfters 130 wie oben beschrieben im Uhrzeigersinn, um einen Luftstrom in Richtung des Luftauslasses 118 zu erzeugen. Dieser Luftstrom wird durch das elektrische Heizelement 125 geleitet und hierbei von den Wärmeableitelementen 320 erwärmt. Um die Wärmeabgabe der Wärmeableitelemente 320 zu verbessern, können diese mit schaufelförmigen Verlängerungen 330 ausgebildet werden. Diese schaufelförmigen Verlängerungen 330 können in Abhängigkeit von den unterschiedlichen Strömungsgeschwindigkeiten des Luftstroms, welche nachfolgend unter Bezugnahme auf Fig. 5 beschrieben werden, ausgeführt sein. Beispielsweise können die Verlängerungen 330 umso länger sein, je größer die Strömungsgeschwindigkeit an einer entsprechenden Stelle des Luftauslasses 118 ist, um somit eine verbesserte Wärmeableitung zu erreichen.

**Fig. 4** zeigt eine Draufsicht auf die in Fig. 3 oben dargestellte Seite des Heizaggregates 100 mit dem im Verbindungsteil 120 angeordneten Heizelement 160. Aus Fig. 4 sind insbesondere die Luftdurchtrittsöffnungen 325 ersichtlich, in die sich die Wärmeableitelemente 320, welche beispielhaft bogenförmig dargestellt sind, erstrecken.

Vorzugsweise werden in dem in den Fig. 1 bis 4 gezeigten Heizaggregat 100 wie oben beschrieben ein oder mehrere PTC-Heizelemente verwendet. Derartige PTC-Heizelemente haben einen so genannten Selbstregelungseffekt, der bei einem entsprechenden Heizelement ein Erreichen einer maximal möglichen Heizleistung nur dann zulässt, wenn im Betrieb alle Bereiche des Heizelements eine im Wesentlichen identische Wärmeabgabe aufweisen. Hierzu muss der vom zugeordneten Radiallüfter erzeugte Luftstrom ein im Wesentlichen homogenes bzw. lineares Strömungsprofil aufweisen, damit die Luftgeschwindigkeiten des Luftstroms an allen Bereichen des PTC-Widerstands annähernd gleich sind, so dass eine gleichmäßige Belastung aller Bereiche erreicht wird und eine gleichförmige Wärmeabgabe erfolgt. Die Strömungsprofile in dem unter Bezugnahme auf die Fig. 1 bis 4 beschriebenen Heizaggregat 100 weisen jedoch ein inhomogenes Strömungsprofil mit unterschiedlichen Luftgeschwindigkeiten auf, wie bei Fig. 5 beschrieben wird.

Eine erste Verbesserung der Heizleistung ist möglich durch die Verwendung von unterschiedlichen Heizelementen bzw. von Mischformen mit unterschiedlichen Heizelementen im Heizaggregat der Fig. 1 bis 4. Beispielsweise kann ein gegebenes Heizelement in einem Luftstrombereich höherer Luftgeschwindigkeiten wabenförmig ausgebildet werden, und im Luftstrombereich niedrigerer Luftgeschwindigkeiten pillenförmig.

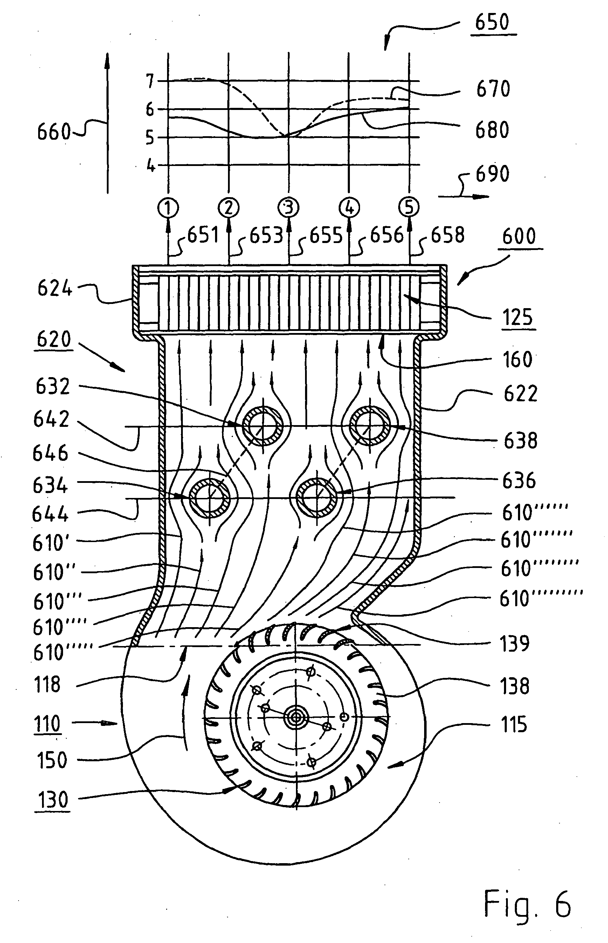

Eine erfindungsgemäße Verbesserung der Heizleistung kann durch eine Beeinflussung des Strömungsprofils erreicht werden. Dementsprechend muss zur Maximierung der Heizleistung im Heizaggregat 100 eine Homogenisierung des Strömungsprofils erfolgen, wie im Anschluss an Fig. 5 unter Bezugnahme auf die Fig. 6 bis 11 beschrieben wird.

**Fig. 5** zeigt einen vereinfachten Längsschnitt durch das Lüftergehäuse 110 mit dem Radiallüfter 130 gemäß den Fig. 1 bis 4. Aus Fig. 5 sind die Lüfterflügel 139 des Lüfterrades 138 klar ersichtlich, welche die in den Druckraum 115 gesaugte und durch die Pfeile 117', 117", 117''' und 117'''' angedeutete Umgebungsluft verdichten und zum Luftauslass 118 transportieren. Somit entsteht an dem Luftauslass 118 ein Luftstrom 500.

Dieser hat an verschiedenen Bereichen 510, 520, 530 des Luftauslasses 118 unterschiedliche Luftgeschwindigkeiten. Diese unterschiedlichen Luftgeschwindigkeiten sind einerseits abhängig von der Ausgestaltung bzw. Formgebung des spiralförmigen Druckraumes 115, andererseits von der Ausgestaltung der Luftleiteinrichtung 140. Beispielsweise wurden in einem Laborversuch mit einem 90mm-Lüfterrad Luftgeschwindigkeiten von etwa 10 m/s im Bereich 510, von 9 m/s im Bereich 520 und von 4 m/s im Bereich 530 gemessen.

Um die unterschiedlichen Geschwindigkeiten des Luftstromes 500 im Wesentlichen zu vereinheitlichen, wird der Luftstrom 500 dem (nicht dargestellten) elektrischen Heizelement 125 über Luftleitelemente zugeführt, wie unten stehend unter Bezugnahme auf die Fig. 6 bis 11 beschrieben wird.

**Fig. 6** zeigt einen Längsschnitt durch ein Heizaggregat 600 gemäß einer ersten Ausführungsform der Erfindung. Wie aus Fig. 6 ersichtlich ist, weist das Heizaggregat 600 das Lüftergehäuse 110 mit dem Radiallüfter 130 aus den Fig. 1 und 3 auf, welche hier nicht erneut im Detail beschrieben werden.

Im Gegensatz zu den Fig. 1 und 3 ist das Lüftergehäuse 110 des Heizaggregats 600 in Fig. 6 mit einem Verbindungsteil 620 verbunden, welches einen ersten Abschnitt 622 zur Aufnahme von Luftleitelementen 632, 634, 636, 638 und einen zweiten Abschnitt 624 zur Aufnahme des elektrischen Heizelements 125 mit dem Heizelement 160 aus einer der Fig. 1 bis 4 aufweist. Das elektrische Heizelement 125 kann erfindungsgemäß wie oben bei den Fig. 1 bis 4 beschrieben aufgebaut und im zweiten Abschnitt 624 befestigt sein, sodass auf eine erneute Beschreibung hiervon verzichtet wird.

Die Luftleitelemente 632, 634, 636, 638 dienen zum Erzeugen eines vorgegebenen Strömungsprofils in einem vom Radiallüfter 130 erzeugten Luftstrom und sind erfindungsgemäß säulenförmig ausgebildet. Hierbei können sowohl rohrförmig als auch stabförmig ausgebildete Luftleitelemente Anwendung finden. Die Anzahl der Luftleitelemente ist hier geradzahlig, und die Anordnung der Luftleitelemente ist symmetrisch.

Wie aus Fig. 6 ersichtlich ist, sind im dargestellten Ausführungsbeispiel vier säulenförmige Luftleitelemente 632, 634, 636, 638 derart zueinander ausgerichtet, dass sie die Eckpunkte eines Parallelogramms 646 bilden, wobei die Luftleitelemente 634, 636 auf einer ersten Geraden 644 angeordnet sind, welche im Wesentlichen parallel zu der Längsachse des Heizelements 125 ausgerichtet ist. Die Luftleitelemente 632, 638 sind auf einer zweiten Geraden 642 angeordnet, welche parallel zu der ersten Geraden 644 und zwischen dieser ersten Geraden 644 und dem Heizelement 125 liegt.

Im Betrieb rotiert das Lüfterrad 138 des Radiallüfters 130 im Uhrzeigersinn, wie durch den Pfeil 150 angedeutet ist, um mit den Lüfterflügeln 139 einen Luftstrom im Druckraum 115 zu erzeugen, wie oben in Bezug auf Fig. 1 im Detail beschrieben ist. Dieser Luftstrom ist symbolisch durch Strömungslinien 610', 610", 610"', 610"", 610''''', 610'''''', 610''''''', 610'''''''', 610''''''''' abgebildet und wird im Folgenden als der Luftstrom 610 bezeichnet.

Der Luftstrom 610 hat am Luftauslass 118 des Lüftergehäuses 110 unterschiedliche Luftgeschwindigkeiten, wie anhand eines Strömungsprofils 650 näher erläutert wird. Durch eine zumindest bereichsweise Verwirbelung des Luftstroms 610 um die säulenförmigen Luftleitelemente 632, 634, 636, 638 herum werden die unterschiedlichen Luftgeschwindigkeiten des Luftstroms 610 aneinander angeglichen, bevor der Luftstrom 610 das Heizelement 125 durchströmt und von diesem erwärmt wird.

Der aus dem Heizaggregat 600 ausströmende, erwärmte Luftstrom 610 ist in Fig. 6 zur Vereinfachung in fünf Bereiche 1 bis 5 unterteilt, welche durch Pfeile 651, 653, 655, 656, 658 angedeutet sind. Diese Bereiche 651, 653, 655, 656, 658 sind auf einer horizontalen Achse 690 des Strömungsprofils 650 abgebildet, auf dessen vertikaler Achse 660 die Luftgeschwindigkeiten des erwärmten Luftstroms 610 in m/s abgebildet sind.

im Strömungsprofil 650 zeigt eine erste Kennlinie 670 die in einem Laborversuch bei Verwendung eines 90mm-Lüfterrades für das Heizaggregat 600 ohne Verwendung der Luftleitelemente 632, 634, 636, 638 in den Bereichen 651, 653, 655, 656, 658 gemessenen Luftgeschwindigkeiten, wobei Geschwindigkeiten von 5 m/s bis zu mehr als 7 m/s abgebildet sind. Dies bedeutet, dass ohne Luftleitelemente Abweichungen von bis zu 2 m/s von der Minimalgeschwindigkeit von 5 m/s auftreten. Eine zweite Kennlinie 680 zeigt die im Laborversuch gemessenen Luftgeschwindigkeiten bei Verwendung der Luftleitelemente 632, 634, 636, 638, welche zwischen 5 m/s und ungefähr 6 m/s liegen. Somit können bei der Verwendung von Luftleitelementen die Abweichungen von der Minimalgeschwindigkeit auf maximal 1 m/s gesenkt werden. Dementsprechend bewirkt die Verwendung der symmetrisch angeordneten Luftleitelemente 632, 634, 636, 638 erfindungsgemäß bereits eine deutliche Linearisierung des Strömungsprofils des Luftstroms 610.

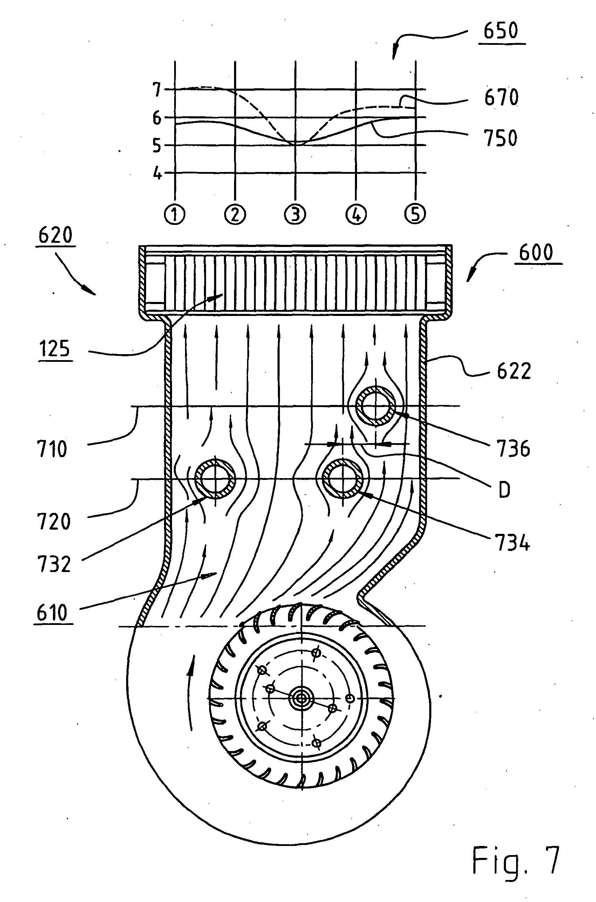

**Fig. 7** zeigt in einem weiteren Längsschnitt das Heizaggregat 600 von Fig. 6 gemäß einer zweiten bevorzugten Ausführungsform. Im Gegensatz zu Fig. 6 weist der erste Abschnitt 622 des Verbindungsteils 620 in Fig. 7 illustrativ eine ungerade Zahl von säulenförmigen Luftleitelementen auf, welche eine asymmetrische Anordnung bilden.

In dem in Fig. 7 dargestellten Ausführungsbeispiel weist der erste Abschnitt 622 drei säulenförmige Luftleitelemente 732, 734, 736 auf. Die Luftleitelemente 732, 734 sind hierbei auf einer ersten Geraden 720 angeordnet, welche im Wesentlichen parallel zu der Längsachse des Heizelements 125 ausgerichtet ist. Das Luftleitelement 736 ist auf einer zweiten Geraden 710 angeordnet, welche parallel zu der ersten Geraden 720 und zwischen dieser und dem Heizelement 125 liegt. Wie Fig. 7 zeigt, ist das Luftleitelement 736 hierbei um einen Abstand D seitlich zum Luftleitelement 734 nach rechts versetzt, bzw. zu der von den Luftleitelementen 732, 734 gebildeten Einheit.

In Fig. 7 zeigt das Strömungsprofil 650 die erste Kennlinie 670 von Fig. 6 sowie eine zweite Kennlinie 750, welche die in einem Laborversuch gemessenen Luftgeschwindigkeiten bei Verwendung der Luftleitelemente 732, 734, 736 in der Anordnung gemäß Fig. 7 zeigt. Diese Luftgeschwindigkeiten bilden nun nur noch eine Spanne von ungefähr 5,3 m/s bis 6 m/s. Somit können bei der Verwendung der Anordnung gemäß Fig. 7 die Abweichungen von der Minimalgeschwindigkeit auf maximal 0,7 m/s gesenkt werden. Dementsprechend bewirkt die Verwendung der asymmetrisch angeordneten Luftleitelemente 732, 734, 736 eine signifikante Linearisierung des Strömungsprofils des Luftstroms 610, dessen Luftgeschwindigkeiten nun annähernd eine Gerade im Strömungsprofil 650 bilden.

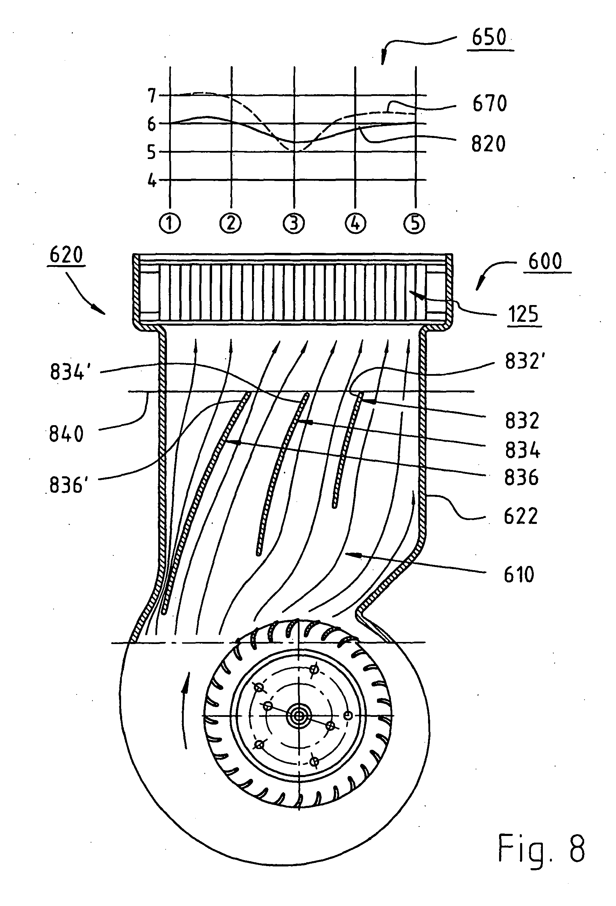

**Fig. 8** zeigt einen Längsschnitt eines nicht erfindungsgemäßen das Heizaggregats . Im Gegensatz zu Fig. 6 weist der erste Abschnitt 622 des Verbindungsteils 620 in Fig. 8 eine vorgegebene Anzahl stegförmiger Luftleitelemente auf, welche annähernd bogenförmig ausgebildet sind.

In dem in Fig. 8 dargestellten Ausführungsbeispiel weist der erste Abschnitt 622 drei stegförmige Luftleitelemente 832, 834, 836 auf, wobei das Luftleitelement 832 ein oberes Ende 832', das Luftleitelement 834 ein oberes Ende 834' und das Luftleitelement 836 ein oberes Ende 836' hat. Die oberen Enden 832', 834', 836' der Luftleitelemente 832, 834, 836 sind vorzugsweise auf einer Geraden 840 parallel zur Längsachse des elektrischen Heizelements 125 angeordnet. Die Luftleitelemente 832, 834, 836 der Fig. 8 haben unterschiedliche Längen, welche abhängig von den jeweiligen Geschwindigkeiten des Luftstroms 610 bestimmt werden.

Die in einem Laborversuch gemessenen Luftgeschwindigkeiten bei Verwendung der Luftleitelemente 832, 834, 836 in der Anordnung gemäß Fig. 8 sind in einer Kennlinie 820 im Strömungsprofil 650 gezeigt, welches zum Vergleich wiederum die Kennlinie 670 von Fig. 6 enthält. Die Luftgeschwindigkeiten gemäß der Kennlinie 820 bilden eine Spanne von ungefähr 5,4 m/s bis 6,2 m/s. Somit können bei der Verwendung der Anordnung gemäß Fig. 8 die Abweichungen von der Minimalgeschwindigkeit auf maximal 0,8 m/s gesenkt werden. Dementsprechend bewirkt auch die Verwendung der Luftleitelemente 832, 834, 836 von Fig. 8 eine deutliche Linearisierung des Strömungsprofils des Luftstroms 610.

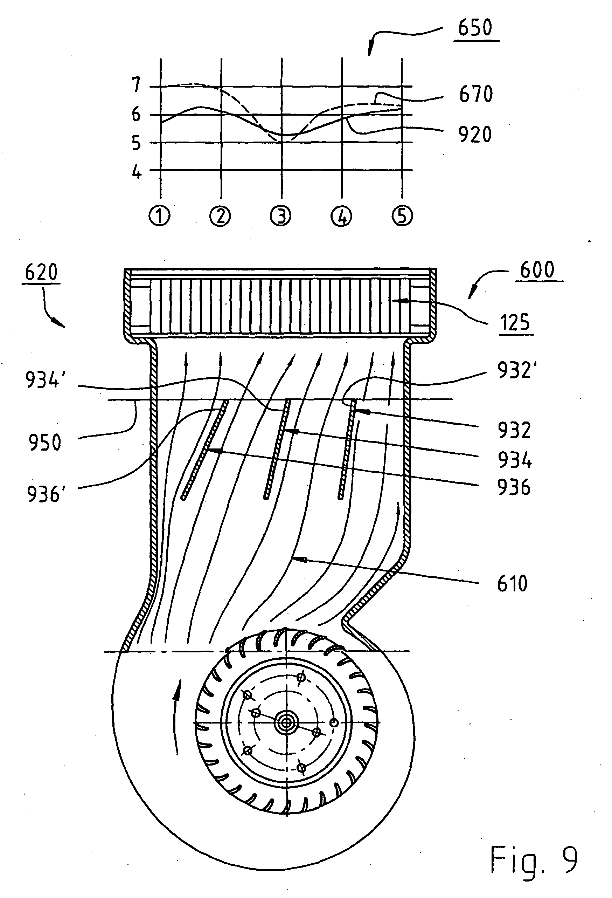

**Fig. 9** zeigt einen Längsschnitt eines nicht erfindungsgemäßen Heizaggregats. Im Gegensatz zu Fig. 6 weist der erste Abschnitt 622 des Verbindungsteils 620 in Fig. 9 eine vorgegebene Anzahl stegförmiger Luftleitelemente auf, welche annähernd geradlinig ausgebildet sind.

In dem in Fig. 9 dargestellten Ausführungsbeispiel weist der erste Abschnitt 622 drei stegförmige Luftleitelemente 932, 934, 936 mit im Wesentlichen gleichen Längen auf, welche jeweils obere Enden 932', 934', 936' aufweisen. Die oberen Enden 932', 934', 936' der Luftleitelemente 932, 934, 936 sind vorzugsweise auf einer Geraden 950 parallel zur Längsachse des elektrischen Heizelements 125 angeordnet. Wie aus den Fig. 8 und 9 ersichtlich ist, sind die stegförmigen Luftleitelemente 932, 934, 936 von Fig. 9 vorzugsweise kürzer als die Luftleitelemente 832, 834, 836 von Fig. 8.

Die in einem Laborversuch gemessenen Luftgeschwindigkeiten bei Verwendung der Luftleitelemente 932, 934, 936 in der Anordnung gemäß Fig. 9 sind in einer Kennlinie 920 im Strömungsprofil 650 gezeigt, welches zum Vergleich wiederum die Kennlinie 670 von Fig. 6 zeigt. Die Luftgeschwindigkeiten gemäß der Kennlinie 920 bilden eine Spanne von ungefähr 5,4 m/s bis 6,3 m/s. Somit können bei der Verwendung der Anordnung gemäß Fig. 9 die Abweichungen von der Minimalgeschwindigkeit auf maximal 0,9 m/s gesenkt werden. Dementsprechend bewirkt auch die Verwendung der Luftleitelemente 932, 934, 936 von Fig. 9 eine deutliche Linearisierung des Strömungsprofils des Luftstroms 610.

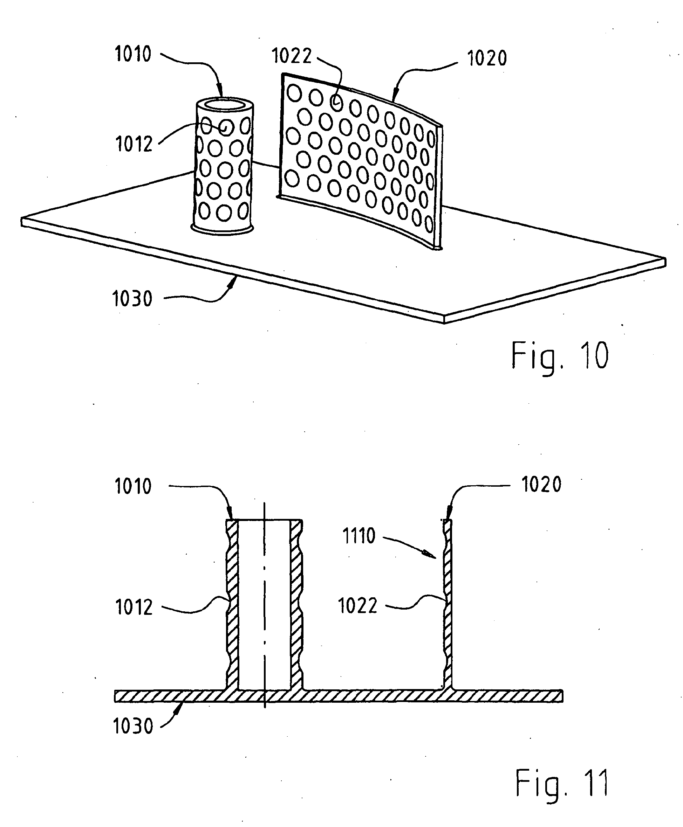

**Fig. 10** zeigt eine bevorzugte Ausführungsform eines erfindungsgemäßen Luftleitelements. Dementsprechend zeigt Fig. 10 einerseits eine erfindungsgemäße röhrenförmige Luftleitsäule 1010 und andererseits einen nicht erfindungsgemâßen bogenförmigen Luftleitsteg 1020, welche beispielhaft auf einer Trägerplatte 1030 (z.B. einer Innenwand eines erfindungsgemäßen Verbindungsteils) angeordnet sind.

Die röhrenförmige Luftleitsäule 1010 hat eine Vielzahl von Mulden 1012, und der bogenförmige Luftleitsteg 1020 hat eine Vielzahl von Mulden 1022. Die Mulden 1012, 1022 dienen zur Verringerung des Oberflächenwiderstandes der Luftleitelemente 1010, 1020, um deren Strömungseigenschaften in einem entsprechenden Verbindungsteil (z.B. Verbindungsteil 120 der Fig. 1 bis 4 oder Verbindungsteil 620 der Fig. 6 bis 9) zu verbessern.

**Fig. 11** zeigt eine Schnittansicht der auf der Trägerplatte 1030 angeordneten Luftleitelemente 1010, 1020 von Fig. 10.

Fig. 11 verdeutlicht die bevorzugte Ausbildung der Mulden 1012, 1022 auf den Luftleitelementen 1010, 1020. Auch zeigt Fig. 11, dass nur eine linke Seite 1110 des nicht erfindungsgemâßen Luftleitstegs 1020 die Mulden 1022 aufweist. Diese Seite 1110 entspricht in Fig. 8 jeweils der rechten Seite der Luftleitstege 832, 834, 836 und ist diejenige Seite, an welcher ein entsprechender Luftstrom (z.B. der Luftstrom 610 von Fig. 8) zumindest bereichsweise auftrifft und umgeleitet wird. Deshalb ist an dieser Seite 1110 eine Verringerung des Oberflächenwiderstandes wünschenswert. An der gegenüberliegenden Seite des Luftleitstegs 1020 trifft der Luftstrom nicht zur Umlenkung auf, so dass der Oberflächenwiderstand dort nur eine untergeordnete Rolle spielt.

Naturgemäß sind im Rahmen der vorliegenden Erfindung vielfache Abwandlungen und Modifikationen möglich.

## Patentansprüche

1. Heizaggregat, insbesondere für ein Fahrzeug, welches Heizaggregat aufweist:
Einen Radiallüfter (100) mit einem Lüftergehäuse (110), welches einen Lufteinlass (116) und eine Luftaustrittsöffnung (118) aufweist;
eine Luftleiteinrichtung (140) mit einer äußeren, etwa spiralförmigen Wand (109), welche sich bis zu der Luftaustrittsöffnung (118) erstreckt;
ein im Lüftergehäuse (110) angeordnetes Radiallüfterrad (130) zur Erzeugung eines Luftstroms vom Lufteinlass (116) über einen Druckraum (115) des Lüftergehäuses (110) zur Luftaustrittsöffnung (118), wobei die im Betrieb vom Radiallüfterrad (130) geförderte Luft (137) an der Luftaustrittsöffnung (118) und im Bereich der spiralförmigen Wand (109) in einer Zone (510) höherer Geschwindigkeit eine höhere Geschwindigkeit hat als in Zonen niedrigerer Geschwindigkeit (520, 530), welche weiter entfernt von der spiralförmigen Wand (109) liegen;
ein zwischen der Luftaustrittsöffnung (118) des Lüftergehäuses (110) und einem Heizelement (185) vorgesehenes Verbindungsteil (620), in welchem säulenartig ausgebildete Luftleitelemente (632, 634, 636, 638, 723, 734, 736) zum Erzeugen eines vorgegebenen Strömungsprofils des Luftstroms vorgesehen sind, welche Luftleitelemente dazu ausgebildet sind, Luft, die in der Zone (510) mit höherer Luftgeschwindigkeit aus dem Spiralgehäuse (140) austritt, umzulenken, um im Bereich des Heizelements (125) eine gleichförmigere Geschwindigkeitsverteilung (680; 750) zu erreichen;
und ein im Bereich der Luftaustrittsöffnung (118) angeordnetes elektrisches Heizelement, welches zur Abgabe von Wärme an den vom Radiallüfter (110) erzeugten Luftstrom dient.

2. Heizaggregat nach Anspruch 1, bei welchem das elektrische Heizelement Luftkammern (310) aufweist, durch welche im Betrieb der vom Radiallüfter (100) erzeugte Luftstrom strömt.

3. Heizaggregat nach Anspruch 2, bei welchem die Luftkammern (210) mindestens teilweise einen Verlauf aufweisen, der etwa der Richtung des Luftstroms im Bereich des Heizelements (125) entspricht.

4. Heizaggregat nach einem der vorhergehenden Ansprüche, bei welchem der Radiallüfter (130) als sogenannter Kleinlüfter ausgebildet ist.

5. Heizaggregat nach einem der vorhergehenden Ansprüche, bei welchem mindestens zwei säulenförmige Luftleitelemente (634, 636; 632, 638) auf einer gedachten Geraden (642; 644) angeordnet sind, welche sich im wesentlichen parallel zur Luftaustrittsöffnung (118) des Sprialgehäuses (140) erstreckt.

6. Heizaggregat nach Anspruch 5, bei welchem zwei säulenförmige Luftleitelemente (634, 636; 732, 734) auf einer ersten gedachten Geraden (644; 720) angeordnet sind, welche sich im Bereich der Luftaustrittsöffnung (118) des Spiralgehäuses (140) befindet,
wobei die Gesamtheit dieser Luftleitelemente in Richtung weg von einer gedachten, zur Luftaustrittsöffnung (118) symmetrischen Stellung in Richtung zur Zone höherer Geschwindigkeit versetzt ist.

7. Heizaggregat nach Anspruch 6, bei welchem mindestens ein säulenförmiges Luftleitelement (632, 638; 736 auf einer zweiten gedachten Geraden (642; 710) angeordnet ist, welch letztere ewa parallel zur ersten Geraden (644; 720) verläuft und einen größeren Abstand von der Luftaustrittsöffnung (118) hat als die erste Gerade (644; 740),
und welche dort im Bereich der Zonen (520, 530) niedrigerer Geschwindigkeit angeordnet ist.

8. Heizaggregat nach einem der vorhergehenden Ansprüche, bei welchem in dem zwischen der Luftaustrittsöffnung (118) des Spiralgehäuses (140) und dem Heizelement (125) vorgesehenen Verbindungsteil vier etwa säulenförmige Luftleitelemente (632, 634, 636, 638) an den Eckpunkten eines gedachten Parallelogramms (646) angeordnet sind, bei dem zwei Seiten etwa parallel zur Luftaustrittsöffnung (118) des Spiralgehäuses (140) verlaufen.

9. Heizaggregat nach einem der vorhergehenden Ansprüche, bei welchem in dem zwischen der Luftaustrittsöffnung (118) des Spiralgehäuses (140) und dem Heizelement (125) vorgesehenen Verbindungsteil (620) drei Luftleitelemente (732, 734, 736) vorgesehen sind, von denen zwei Luftleitelemente (732, 734) auf einer ersten Geraden (720) angeordnet sind, welche etwa parallel zur Luftaustrittsöffnung (118) des Spiralgehäuses (140) verläuft,
und das dritte Luftleitelement (736) zwischen der ersten Geraden (720) und dem elektrischen Heizelemente (125) angeordnet ist.

10. Heizaggregat nach einem der vorhergehenden Ansprüchde, bei welchem mindestens ein Teil der Luftleitelemente (1010, 1020) eine Oberfläche aufweist, welche mindestens bereichsweise mit Mulden (1012, 1022) versehen ist, um dort den Oberflächenwiderstand der Luftleitelemente (1010, 1020) zu verringern.

11. Heizaggregat nach einem der vorhergehenden Ansprüche, bei welchem das elektrische Heizelement (125; 160) mindestens bereichsweise einen Heizdraht aufweist.

12. Heizaggregat nach einem der vorhergehenden Ansprüche, bei welchem das elektrische Heizelement (160) mindestens einen PTC-Widerstand (310) aufweist.

13. Heizaggregat nach einem der vorhergehenden Ansprüche, bei welchem das elektrische Heizelement (125, 160) mindestens eine Luftdurchtrittsöffnung (325) aufweist, in welche sich ein Wärmeableitelement (120) erstreckt, das mit dem Heizelement (160) Wärme leitend verbunden ist.

14. Heizaggregat nach einem der vorhergehenden Ansprüche, bei welchem das elektrische Heizelement (125) wabenförmig ausgebildet ist.

## Claims

1. Heating unit, in particular for a vehicle, which heating unit has:
a radial fan (100) having a fan housing (110) which has an air inlet (116) and an air outlet opening (118);
an air directing device (140) having an outer, substantially helical wall (109), which extends as far as the air outlet opening (118);
a radial fan wheel (130) which is arranged in the fan housing (110) for producing an air flow from the air inlet (116) via a pressure space (115) of the fan housing (110) to the air outlet opening (118), the air (137) conveyed by the radial fan wheel (130) during operation having a higher speed at the air outlet opening (118) and in the region of the helical wall (109) in a zone (510) of relatively high speed than in zones (520, 530) of relatively low speed, which are located further away from the helical wall (109),
a connection component (620) which is provided between the air outlet opening (118) of the fan housing (110) and a heating element (185) and in which there are provided column-like air directing elements (632, 634, 636, 638, 723, 734, 736) for producing a predetermined flow profile of the air flow, which air directing elements are configured to redirect air which is discharged from the helical housing (140) in the zone (510) of a relatively high air speed, in order to achieve a more uniform distribution of speed (680; 750) in the region of the heating element (125);
and an electric heating element which is arranged in the region of the air outlet opening (118) and which serves to transfer heat to the air stream produced by the radial fan (110).

2. Heating unit according to claim 1, wherein the electric heating element has air chambers (310) through which the air stream produced by the radial fan (100) flows during operation.

3. Heating unit according to claim 2, wherein the air chambers (210) at least partially have a path which substantially corresponds to the direction of the air flow in the region of the heating element (125).

4. Heating unit according to any one of the preceding claims, wherein the radial fan (130) is constructed as a so-called small fan.

5. Heating unit according to any one of the preceding claims, wherein at least two column-like air directing elements (634, 636; 632, 638) are arranged on a notional straight line (642; 644) which extends substantially parallel with the air outlet opening (118) of the helical housing (140).

6. Heating unit according to claim 5, wherein two column-like air directing elements (634, 636; 732, 734) are arranged on a first notional straight line (644; 720) which is located in the region of the air outlet opening (118) of the helical housing (140), all of these air directing elements being offset in the direction away from a notional position symmetrical relative to the air outlet opening (118) in the direction towards the zone of relatively high speed.

7. Heating unit according to claim 6, wherein at least one column-like air directing element (632, 638; 736) is arranged on a second notional straight line (642; 710) which extends substantially parallel with the first straight line (644; 720) and which has a greater spacing relative to the air outlet opening (118) than the first notional straight line (644; 740), and which is arranged at that location in the region of the zones (520, 530) of relatively low speed.

8. Heating unit according to any one of the preceding claims, wherein, in the connection component which is provided between the air outlet opening (118) of the helical housing (140) and the heating element (125), there are arranged four substantially column-like air directing elements (632, 634, 636, 638) at the corner locations of a notional parallelogram (646) in which two sides extend substantially parallel with the air outlet opening (118) of the helical housing (140).

9. Heating unit according to any one of the preceding claims, wherein, in the connection component (620) which is provided between the air outlet opening (118) of the helical housing (140) and the heating element (125), there are provided three air directing elements (732, 734, 736) of which two air directing elements (732, 734) are arranged on a first straight line (720), which extends substantially parallel with the air outlet opening (118) of the helical housing (140), and the third air directing element (736) is arranged between the first straight line (720) and the electric heating element (125).

10. Heating unit according to any one of the preceding claims, wherein at least some of the air directing elements (1010, 1020) have a surface which is at least in regions provided with recesses (1012, 1022) in order to reduce at those locations the surface resistance of the air directing elements (1010, 1020).

11. Heating unit according to any one of the preceding claims, wherein the electric heating element (125; 160) at least partially has a heating wire.

12. Heating unit according to any one of the preceding claims, wherein the electric heating element (160) has at least one PTC resistor (310).

13. Heating unit according to any one of the preceding claims, wherein the electric heating element (125, 160) has at least one air passage opening (325) in which a heat dissipation element (120) extends and is connected to the heating element (160) so as to conduct heat.

14. Heating unit according to any one of the preceding claims, wherein the electric heating element (125) is constructed in the form of a honeycomb.

## Revendications

1. Appareil de chauffage, en particulier pour un véhicule, lequel appareil de chauffage présente :
un ventilateur radial (100) avec un carter de ventilateur (110) qui présente une entrée d'air (116) et une ouverture de sortie d'air (118) ;
un dispositif de guidage d'air (140) avec une paroi extérieure (109), approximativement en forme de spirale, qui s'étend jusqu'à l'ouverture de sortie d'air (118) ;
une roue de ventilateur radial (130) disposée dans le carter de ventilateur (110) pour générer un flux d'air de l'entrée d'air (116) vers l'ouverture de sortie d'air (118) en passant par une chambre de compression (115) du carter de ventilateur (110), l'air (137) refoulé en fonctionnement par la roue de ventilateur radial (130) ayant, à l'ouverture de sortie d'air (118) et au voisinage de la paroi en forme de spirale (109), dans une zone de vitesse plus élevée (510), une vitesse plus élevée que dans des zones de plus faible vitesse (520, 530) qui sont plus éloignées de la paroi en forme de spirale (109) ;
une pièce de liaison (620) prévue entre l'ouverture de sortie d'air (118) du carter de ventilateur (110) et un élément chauffant (185), dans laquelle sont prévus des éléments de guidage d'air (632, 634, 636, 638, 723, 734, 736) de forme columnaire pour produire un profil d'écoulement prédéfini du flux d'air, lesquels éléments de guidage d'air sont conçus pour dévier l'air sortant à plus grande vitesse du carter en spirale (140) dans la zone (510) de manière à atteindre une répartition de vitesse (680 ; 750) plus uniforme au niveau de l'élément chauffant (125) ;
et un élément chauffant électrique disposé au niveau de l'ouverture de sortie d'air (118), lequel sert à délivrer de la chaleur au flux d'air produit par le ventilateur radial (110).

2. Appareil de chauffage selon la revendication 1, dans lequel l'élément chauffant électrique présente des chambres d'air (310) par lesquelles le flux d'air produit par le ventilateur radial (100) s'écoule en fonctionnement.

3. Appareil de chauffage selon la revendication 2, dans lequel les chambres d'air (210) présentent au moins en partie un tracé qui correspond approximativement à la direction du flux d'air au niveau de l'élément chauffant (125).

4. Appareil de chauffage selon l'une des revendications précédentes, dans lequel le ventilateur radial (130) est réalisé sous la forme d'un « miniventilateur ».

5. Appareil de chauffage selon l'une des revendications précédentes, dans lequel au moins deux éléments de guidage d'air columnaires (634, 636 ; 632, 638) sont disposés sur une droite imaginaire (642 ; 644) qui s'étend essentiellement parallèlement à l'ouverture de sortie d'air (118) du carter en spirale (140).

6. Appareil de chauffage selon la revendication 5, dans lequel deux éléments de guidage d'air columnaires (634, 636 ; 732, 734) sont disposés sur une première droite imaginaire (644 ; 720) qui se trouve au niveau de l'ouverture de sortie d'air (118) du carter en spirale (140), la totalité de ces éléments de guidage d'air étant décalée, dans une direction les éloignant d'une position imaginaire symétrique par rapport à l'ouverture de sortie d'air (118), vers la zone de vitesse plus élevée.

7. Appareil de chauffage selon la revendication 6, dans lequel au moins un élément de guidage d'air columnaire (632, 638 ; 736) est disposé sur une deuxième droite imaginaire (642 ; 710) qui est approximativement parallèle à la première droite imaginaire (644 ; 720) et présente une distance plus grande par rapport à l'ouverture de sortie d'air (118) que la première droite (644 ; 720), et qui y est disposé au niveau des zones de plus faible vitesse (520, 530).

8. Appareil de chauffage selon l'une des revendications précédentes, dans lequel quatre éléments de guidage d'air approximativement columnaires (632, 634, 636, 638) sont disposés dans la pièce de liaison prévue entre l'ouverture de sortie d'air (118) du carter en spirale (140) et l'élément chauffant (125), aux sommets d'un parallélogramme imaginaire (646) dont deux côtés sont approximativement parallèles à l'ouverture de sortie d'air (118) du carter en spirale (140).

9. Appareil de chauffage selon l'une des revendications précédentes, dans lequel trois éléments de guidage d'air (732, 734, 736) sont prévus dans la pièce de liaison (620) prévue entre l'ouverture de sortie d'air (118) du carter en spirale (140) et l'élément chauffant (125), dont deux éléments de guidage d'air (732, 734) sont disposés sur une première droite (720) qui est approximativement parallèle à l'ouverture de sortie d'air (118) du carter en spirale (140),
et le troisième élément de guidage d'air (736) est disposé entre la première droite (720) et l'élément chauffant électrique (125).

10. Appareil de chauffage selon l'une des revendications précédentes, dans lequel au moins une partie des éléments de guidage d'air (1010, 1020) présente une surface qui est pourvue au moins par endroits de cavités (1012, 1022) pour diminuer à ces endroit la résistance superficielle des éléments de guidage d'air (1010, 1020).

11. Appareil de chauffage selon l'une des revendications précédentes, dans lequel l'élément chauffant électrique (125 ; 160) présente au moins par endroits un fil chauffant.

12. Appareil de chauffage selon l'une des revendications précédentes, dans lequel l'élément chauffant électrique (160) présente au moins une résistance CTP (310).

13. Appareil de chauffage selon l'une des revendications précédentes, dans lequel l'élément chauffant électrique (125, 160) présente au moins une ouverture de passage d'air (325) dans laquelle s'étend un élément dissipateur de chaleur (120) qui est relié de manière thermoconductrice à l'élément chauffant (160).

14. Appareil de chauffage selon l'une des revendications précédentes, dans lequel l'élément chauffant électrique (125) présente une structure alvéolaire.
